(19) Europäisches Patentamt
European Patent Office
Office européen des brevets

(11) Veröffentlichungsnummer: **0 565 042 A2**

# (12) EUROPÄISCHE PATENTANMELDUNG

(21) Anmeldenummer: **93105665.9**

(22) Anmeldetag: **06.04.93**

(51) Int. Cl.$^5$: **E21B 33/138**, E21B 43/25, E21B 43/02

(30) Priorität: **10.04.92 DE 4212211**

(43) Veröffentlichungstag der Anmeldung: **13.10.93 Patentblatt 93/41**

(84) Benannte Vertragsstaaten: **DE DK GB NL**

(71) Anmelder: **HOECHST AKTIENGESELLSCHAFT**
**D-65926 Frankfurt(DE)**

(72) Erfinder: **Pusch Günther, Pr. Dr.**
**Wilhelm-Hasselmann-Str. 1**
**W-29227 Celle(DE)**
Erfinder: **Ranjbar Mohammad, Dr.**
**Am Ehrenhain 4**
**W-38678 Clausthal-Zellerfeld(DE)**

## (54) Verfahren zur Verringerung oder vollständiger Einstellung des Wasserzuflusses bei Bohrungen zur Gewinnung von Öl und/oder Kohlenwasserstoffgas.

(57) Die vorliegende Erfindung betrifft ein Verfahren zur Verringerung oder vollständigen Einstellung der Wasserzuflüsse einer Lagerstätte in mindestens einem Teil einer Bohrung zur Gewinnung von Öl und/oder Kohlenwasserstoffgas, die eine Lagerstätte durchquert, wobei man ausgehend von der Bohrung in den Teil der Lagerstätte, in dem man die Wasserzuflüsse reduzieren oder einstellen will, eine Lösung eines Polymers einbringt und anschließend die Bohrung zur Gewinnung von Öl oder Kohlenwasserstoffgas in Betrieb nimmt, wobei die Fluide, die in der Lagerstätte vorhanden sind, mit dem genannten, das Polymer enthaltenden Teil der Lagerstätte in Kontakt kommen und das Öl und/oder Kohlenwasserstoffgas diesen Teil der Lagerstätte durchströmt und in die Bohrung gelangt, das dadurch gekennzeichnet ist, daß die nicht-wäßrige Lösung eines hydrophoben, wasserunlöslichen Polymers in die Lagerstätte eingebracht wird, und das Polymer in Gegenwart des Haftwassers der Lagerstätte ausfällt.

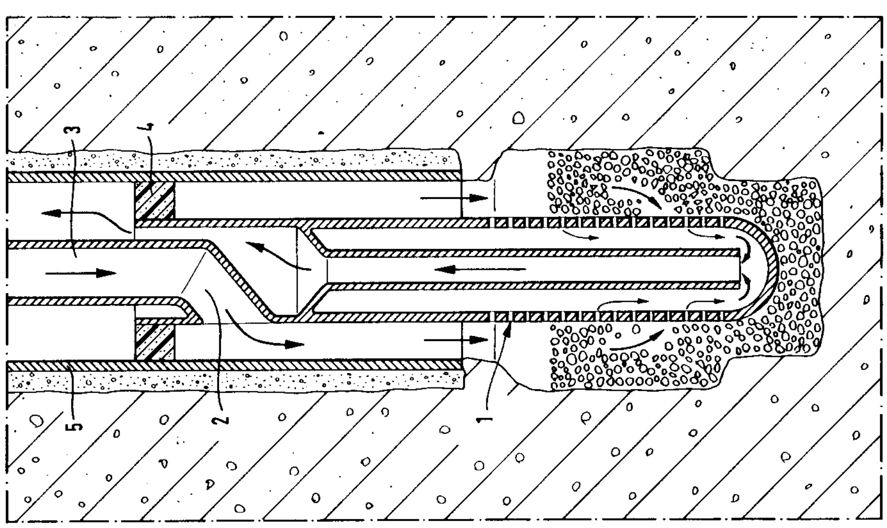


Fig. 1

EP 0 565 042 A2

Oft existiert Wasser als Salzlösung in derselben Formation wie Öl oder Gas. Die Gewinnung von Öl oder von Kohlenwasserstoffgas bringt also die Gewinnung von Wasser in einer solchen Menge mit sich, daß sie beträchtliche Probleme aufwirft. Sie verursacht direkt oder indirekt Ablagerungen von Salzen in der Nachbarschaft der Bohrung oder in dem Bohrrohr selbst. Sie vergrößert beträchtlich die Korrosion aller Metallteile unter- oder übertage und vergrößert ohne Nutzen die Mengen der gepumpten, übergeführten und gelagerten Flüssigkeiten. Außerdem schafft sie mit dem Öl Emulsionen, die schwierig übertage zu brechen sind und die untertage in den Hohlräumen der Formation Blockierungen bilden.

Gemäß dem Stand der Technik sind zahlreiche Verfahren vorgeschlagen und ausgeübt worden, die dazu bestimmt sind, die Wasserzuflüsse in die Bohrungen zur Gewinnung von Öl oder Kohlenwasserstoffgas zu verringern. Sie bestehen oft darin, in der Formation zwischen dem Wasser und der Bohrung oder zwischen dem Wasser und dem Öl oder Kohlenwasserstoffgas eine undurchdringliche Sperre einzubringen. Die gewöhnlich eingebrachten Mittel blockieren fast ebensoviel Öl oder Kohlenwasserstoffgas wie Wasser. Die Bestandteile dieser Sperre können sein: Zement, Harze, Suspensionen von festen Teilen, Paraffine oder wasserlösliche Polymere, die durch Einbringen von sogenannten Vernetzern (cross-linker) in der Lagerstätte vernetzt werden.

Neben diesen Verfahren der Totalblockierung des Wasserzuflusses sind auch Verfahren der partiellen Blockierung bekannt. Zur Zeit verwendet man wasserlösliche Polymere, wobei die Polymere, die in Lösung in das poröse Medium wie Kies, Sandstein, Kalkstein oder Fels eingebracht werden, an der Oberfläche des porösen Mediums adsorbiert werden und soweit in die Poren hineinragen, daß sie die Wasserzuflüsse durch Reibung verringern. Die Verwendung wasserlöslicher Polymere ist aus US-A-4 095 651, US-A- 4 718 491 und US-A-4 842 071 bekannt. Der Einsatz derartiger wasserlöslicher Polymere besitzt den Nachteil, daß die Polymere durch das bei der Förderung anfallende Lagerstättenwasser desorbiert und gelöst werden können.

Aufgabe der Erfindung ist es, ein Verfahren zur Verringerung oder vollständigen Einstellung des Wasserzuflusses in Produktionsbohrungen zur Verfügung zu stellen, ohne die Gewinnung von Öl oder von Kohlenwasserstoffgas zu verringern. Überraschenderweise hat sich gezeigt, daß in organischen Lösungsmitteln gelöste hydrophobe, wasserunlösliche Polymere, wie Polystyrol, Copolymere des Polystyrols, Poly(meth)acrylsäureester, deren Copolymere und Ethylen-Vinylacetat-Copolymere sich gut in die Formation, in der die Wasserabsperrung vorgenommen werden soll, einbringen lassen, in Gegenwart des dort vorhandenen Haftwassers ausfallen und für eine gute Wasserabsperrung sorgen.

Das erfindungsgemäße Verfahren darf nicht mit dem Verfahren zur tertiären Gewinnung von Öl verwechselt werden, gemäß dem eine Polymerlösung, die im allgemeinen eine schwache Konzentration besitzt (einige 100 ppm) durch eine oder mehrere Injektionsbohrungen eingebracht wird, und zwar mit einem ausreichenden Druck, damit die Lösung in die Formation eindringt und einen Teil des Öles dieser Formation ersetzt, das sodann mit einer anderen Reihe von Produktionsbohrungen gewonnen wird. Die eingebrachten Mengen sind in der Größenordnung des Volumens der Formation. Es ist wohlbekannt, daß polymerhaltiges Wasser für diese Gewinnungverfahren viel wirksamer ist - da es viskoser ist als das Lagerstättenwasser.

Das erfindungsgemäße Verfahren darf weiterhin nicht mit dem Verfahren verwechselt werden, daß darin besteht, ein Polymer zu Bohrflüssigkeiten zuzufügen. Diese Flüssigkeiten haben den Zweck, das Bohrwerkzeug zu schmieren, das Austragen der Gesteinsbruchstücke zu ermöglichen, einen Gegendruck auszuüben, der merklich gleich zu dem Druck untertage ist und eine Aufschlämmung auf den Wänden der Bohrung zu bewirken. Sie zirkulieren in einem geschlossenen Kreislauf zwischen dem Boden und der Oberfläche, wo sie filtriert werden und ihre Zusammensetzung nachgeregelt wird. Die verwendeten Mengen sind gering, und zwar in der Größenordnung des Volumens der Bohrung.

Das erfindungsgemäße Verfahren, dessen Ziel es ist, die Wasserzuflüsse in einer Bohrung im Laufe der Produktion zu reduzieren, besteht darin, in die Lagerstätte - ausgehend von dieser Bohrung - eine Menge einer Polymerlösung einzubringen.

Gegenstand der Erfindung ist ein Verfahren zur Verringerung oder vollständigen Einstellung der Wasserzuflüsse aus einer Lagerstätte in mindestens einem Teil einer Bohrung zur Gewinnung von Öl und/oder Kohlenwasserstoffgas, die eine Lagerstätte durchquert, wobei man ausgehend von der Bohrung in den Teil der Lagerstätte, in dem man die Wasserzuflüsse reduzieren oder einstellen will, eine Lösung eines Polymers einbringt und anschließend die Bohrung zur Gewinnung von Öl oder Kohlenwasserstoffgas in Betrieb nimmt, wobei die Fluide, die in der Lagerstätte vorhanden sind, mit dem genannten, das Polymer enthaltenden Teil der Lagerstätte in Kontakt kommen und das Öl und/oder Kohlenwasserstoffgas diesen Teil der Lagerstätte durchströmt und in die Bohrung gelangt, dadurch gekennzeichnet, daß die nicht-wäßrige Lösung eines hydrophoben, wasserunlöslichen Polymers in die Lagerstätte eingebracht wird, und das Polymer in Gegenwart des Haftwassers der Lagerstätte ausfällt.

Die erfindungsgemäß verwendeten Polymere sind wasserunlöslich, löslich in organischen Lösungsmittel und besitzen einen hydrophoben Charakter. Nachfolgend werden geeignete Homo- und Copolymere genannt, die in dem erfindungsgemäßen Verfahren eingesetzt werden können.

Polystyrole enthaltend Struktureinheiten der Formel I

$-(CH(C_6H_5)-CH_2)_n-$

wobei n eine Zahl zwischen 90 und 9000 ist und gegebenenfalls weiteren Comonomeren, wie Acrylnitril, α-Methylstyrol und Maleinsäureanhydrid.

Das Molekulargewicht der Polystyrole liegt im Bereich zwischen 1000 und $10^6$, bevorzugt zwischen 10000 und 500000.

- Poly(meth)acrylsäure-$C_{14}$-$C_{22}$-alkylester (A),
- Copolymere (B) aus

50 bis 99,9 Gew.-% eines (Meth)acrylsäure-$C_{14}$-$C_{22}$-alkylesters und
50 bis 0,1 Gew.-% eines Comonomeren der Formel II

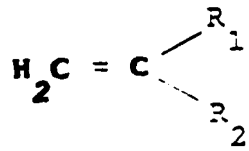

wobei
$R^1$ Wasserstoff oder Methyl,
$R^2$ eine Gruppe der Formeln

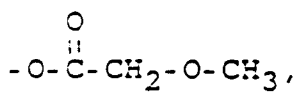, 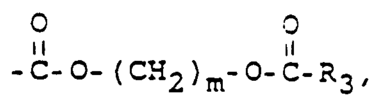,

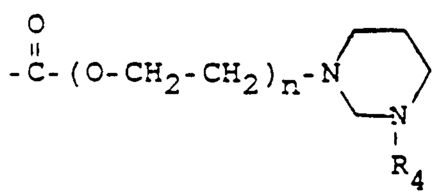, 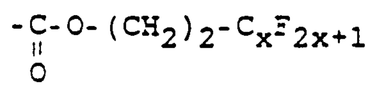,

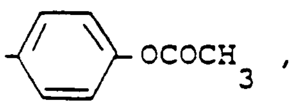, 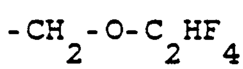, 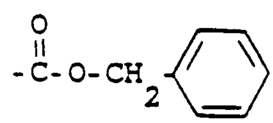 oder

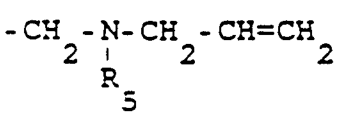.

$R^3$ $C_1$-$C_{80}$-Alkyl, $C_2$-$C_{80}$-Alkenyl, $C_5$- oder $C_6$-Cycloalkyl oder Cycloalkenyl, die durch Alkylgruppen substituiert sein können, Aralkyl, Alkaryl oder den Rest einer Dimerfettsäure, der Maleinsäure, der Bernsteinsäure oder einer $C_6$-$C_{22}$-Alkenylbernsteinsäure,
$R_4$ $C_1$-$C_{80}$-Alkyl, $C_1$-$C_{80}$-Alkenyl, $C_5$- oder $C_6$-Cycloalkyl oder Cycloalkenyl, die durch Alkylgruppen substituiert sein können, Aryl, Aralkyl oder Alkaryl,
$R_5$ $C_6$-$C_{20}$-Alkyl,
m 2 oder 3
n eine Zahl von 1 bis 30 und
x eine Zahl von 2 bis 20 bedeuten.
Bevorzugt sind solche Comonomeren, bei denen $R_3$ und $R_4$ $C_{6-36}$-Alkyl, $C_6$-$C_{36}$-Alkenyl, Cyclohexyl,

Cyclohexenyl, Naphthenyl, Phenyl, Benzyl, $C_1$-$C_4$-Mono-, Di- oder Tri-alkylphenyl oder $R_3$ auch den Rest einer Dimerfettsäure, der Maleinsäure, der Bernsteinsäure oder einer $C_6$-$C_{18}$-Alkenylbernsteinsäure und x Zahlen von 4 bis 16 bedeuten.

- Polymermischungen bestehend aus 10 bis 90 Gew.-%, bevorzugt 60 bis 80 Gew.-% Poly(meth)acrylsäure-$C_{14}$-$C_{22}$-alkylester (A), und 90 bis 10 Gew.-%, bevorzugt 40 bis 20 Gew.-% mindestens eines Copolymers (B).
- Ethylen-Vinylacetat-Copolymere mit einem Molekulargewicht von 700 bis 600000, bevorzugt 3000 bis 60000, wobei das Mischpolymerisat 99 bis 40 Gew.-% Ethylen-Einheiten enthält und das Gewichtsverhältnis der beiden Mischpolymerisate im Bereich von 20:1 bis 1:20 liegt.
- Terpolymere, die neben Ethylen 0,5 bis 20 Gew.-% Diisobutylen und 20 bis 25 Gew.-% Vinylacetat (jeweils bezogen auf das Terpolymerisat) enthalten. Das Molekulargewicht der Terpolymere liegt im Bereich zwischen 1000 bis 100000, bevorzugt 10000 bis 30000.
- Copolymere aus Ethylen und einem Ester des Vinylalkohols oder der Acrylsäure oder der Methacrylsäure als Comonomer, die je 100 Gewichtsteile Ethylen, 25 bis 55 Gewichtsteile des Comonomeren enthalten.

Die Ester des Vinylalkohols enthalten 4 bis 12 Kohlenstoffatome und sind Derivate von gesättigten aliphatischen Monocarbonsäuren, die geradkettig oder verzweigt sein können. Bewährt haben sich beispielsweise Ester mit 4 bis 8 Kohlenstoffatomen. Besonders geeignet sind Vinylacetat und Vinylpropionat. Unter Acrylsäure- bzw. Methacrylsäureestern werden Verbindungen verstanden, die sich von geradkettigen oder verzweigten, gesättigten, aliphatischen Alkohlen mit 2 bis 20 Kohlenstoffatomen ableiten. Bevorzugt weist der Alkoholrest 2 bis 8 Kohlenstoffatome auf. Besonders geeignet sind n-Butylacrylat, tert.-Butylacrylat, n-Butylmethacrylat und tert.-Butylmethacrylat.

Die erfindungsgemäß verwendeten hydrophoben, wasserunlöslichen Homo- und Copolymere sowie Verfahren zu deren Herstellung sind aus Ullmann, 4. Auflage, Bd. 19, Seiten 266-293, EP-A-376 138, DE-C-20 37 673, EP-A-203 554 und DE-A-36 40 613 bekannt.

Geeignete organische Lösungsmittel sind solche, die zumindest teilweise in Wasser löslich oder zumindest im Gemisch mit anderen organischen Lösungsmitteln teilweise in Wasser löslich sind und das einzusetzende Copolymer in ausreichender Menge lösen. Beispielhaft seien genannt Ketone, wie Aceton oder Diacetonalkohol und ein- oder mehrkernige, gegebenenfalls substituierte aromatische Kohlenwasserstoffe, wie Toluol oder Xylol sowie deren Gemische.

Die Konzentration der eingesetzten Polymerlösung kann innerhalb großer Bereiche gewählt werden und liegt vorzugsweise zwischen 0,01 bis 20, bevorzugt 0,1 bis 10 Gew.-%. Die Menge des Copolymers, die man in die Produktionszone um die Bohrung einbringt, hängt von den örtlichen Bedingungen ab. In den meisten Fällen beträgt sie 5 bis 500 kg und vorzugsweise 20 bis 100 kg pro vertikalen Meter der behandelten Zone.

Die Art der Einbringung der Polymerlösung erfolgt nach den bekannten Maßnahmen des Standes der Technik. Allgemein gesagt, übt man auf die Polymerlösung einen Druck aus, der größer ist als der Druck, der von den Fluiden in der Tiefe, d.h. den dort vorhandenen Flüssigkeiten und Gasen, ausgeübt wird (Lagerstättendruck). Dies ermöglicht es der Polymerlösung in die Lagerstätte bis zu bemerkenswerten Entfernungen von der Bohrung einzudringen, vorzugsweise mindestens 5 m unter den oben genannten Verhältnissen. Es hat sich gezeigt, daß es vorteilhaft ist, die Polymerlösung in ein Kiesbettfilter, das in den Ringraum zwischen Bohrlochswand und Filter eingeschwemmt wird, einzubringen. Das Errichten eines Kiesbettfilters ist z.B. bekannt aus Patton, L. Douglas und Abbott, W.A.: "Well completions and workovers - Part 19 (The Systems Approach to Sand Control)" Pet. Eng. Intl. (November 1981) 156 - 176. Wegen des bevorzugten Einsatzes soll das Verfahren einleitend kurz beschrieben werden.

Figur 1 zeigt einen Längsschnitt durch ein Kiesbettfilter.

Durch Einsatz eines sogenannten Räumers (reamer) wird eine Vergrößerung des Lochdurchmessers des Bohrlochs herbeigeführt. Als Räumer werden üblicherweise nach außen klappbare Meißel eingesetzt, die sich am Bohrkopf befinden. In dieses vergrößerte Bohrloch wird ein Filterrohr 1 (liner) gehängt, das im oberen Teil ein Spülstromumleitungsteil 2, auch "cross-over tool" genannt, enthält. In etwa gleicher Höhe von 2 wird ein am Spülrohr 3 (tubing) befestigter Bohrlochabschlußpacker 4 gesetz. Der Spülstrom bestehend aus Spülflüssigkeit und Kies (gravel) wird über den Ringraum zwischen Spülrohr und Schutzrohr in den Filterraum geleitet und der Kies auf die Sole geschüttet. Die Spülflüssigkeit tritt durch die Schlitze des Liners (Schlitzweite kleiner als Korndurchmesser des Kies) in das Spülrohr ein und wird nach übertage geleitet (indirekte Zirkulation). Der Spülstromdruck und die Schwerkraft führen zu einer schichtweisen Anhäufung des Kiesbettes bis zum Spülstromumleitungsteil 2. Ist das Kiesbett aufgefüllt, steigt der Zirkulationsdruck an. Über diesen Druckanstieg erhält man eine Kontrolle über die Füllhöhe des Kiesbettes. Das Spülstromumleitungsteil 2 wird geschlossen, die Rohrverbindung oberhalb des Packers gelöst und die

Spülrohrgarnitur ausgebaut. Anschließend erfolgt der Einbau eines Injektionsrohres bis auf die Sole, mit dessen Hilfe das Einbringen der Polymerlösung erfolgt.

Der Vorgang des Einbringens der Polymerlösung besteht üblicherweise aus mehreren Einzelschritten, die nachfolgend erläutert werden.

In Abhängigkeit von dem eingesetzten Polymer wird zunächst salzhaltiges Wasser in die Lagerstätte eingebracht. Dieses salzhaltige Wasser hat vorteilhafterweise eine andere Zusammensetzung wie das vorhandene Lagerstättenwasser. Durch das Einbringen des salzhaltigen Wassers wird das in dem zu behandelnden Bereich vorhandene Lagerstättenwasser ausgetauscht. In Abhängigkeit von der nachfolgend eingesetzten Polymerlösung ergeben sich vorteilhafte Auswirkungen auf das Ausfällen des gelösten Polymers.

Das salzhaltige Wasser kann eines oder mehrere Salze von Alkali- oder Erdalkalimetallen, insbesondere NaCl, KCl, $MgCl_2$, $MgSO_4$, $CaCl_2$, $Na_2SO_4$, $K_2SO_4$ und/oder $NaNO_3$, und allgemein von Chloriden, Sulfaten oder Nitraten von Metallen, wie z.B. Natrium, Kalium, Calcium oder Magnesium enthalten. Man bevorzugt Lösungen, die wenigstens zum größten Teil Natriumchlorid enthalten. Die Salze der Erdalkalimetalle sind weniger wünschenswert, insbesondere in größeren Mengen, da sie unerwünschte Niederschläge erzeugen können, z.B. wenn das Milieu Carbonate enthält oder einen pH-Wert besitzt, der gleich oder höher als 9 ist. Die Konzentration an Salzen kann innerhalb großer Bereiche gewählt werden. Sie hängt von der Natur und der Konzentration an Salz des Wassers der Lagerstätte ab, so daß es nicht möglich ist, einen allgemeinen Bereich der verwendbaren Werte anzugeben. Ein einfacher vorheriger Versuch ermöglicht es die beste Konzentration an Salz zu ermitteln. Als allgemeine Regel gilt, daß die Salze der Alkalimetalle in stärkerer Konzentration verwendet werden müssen als die Salze der Erdalkalimetalle. Relativ hohe Konzentrationen sind im allgemeinen besonders günstig, z.B. für den Fall von Natriumchlorid mindestens 20 g und vorzugsweise mindestens 75 g Salz/l Wasser, insbesondere 100 bis 200 g/l. Calciumchlorid verwendet man gewöhnlich mit einer Konzentration von mindestens 0,5 g/l, vorzugsweise 10 bis 20 g/l.

Im Anschluß wird ein sogenanntes Verdrängungsmittel, wie Dieselöl, in das Filterbett und die anschließende Lagerstätte eingebracht, das das vorhandene Porenwasser verdrängt. Im Idealfall wird so viel Porenwasser verdrängt, daß nur noch das sogenannte Haftwasser vorhanden ist, wobei unter Haftwasser das Wasser zu verstehen ist, das die Oberfläche der Formation benetzt. Es hat sich gezeigt, daß beim Einbringen von hochviskosen Verdrängungsmitteln, wie Ölraffinaten nur wenig Haftwasser zurückbleibt und dies zu einem verzögerten Ausfallen der nachfolgend eingebrachten Polymerlösung führt. Andererseits wird bei dem Einsatz niedrig-viskoser Verdrängungsmittel, wie Dieselöl, weniger Porenwasser verdrängt und damit ein schnelleres Ausfallen der Polymerlösung erreicht.

Durch die beschriebenen Maßnahmen: Einbringen von salzhaltigem Wasser und/oder Einbringen von Verdrängungsmittel unterschiedlicher Viskosität wird ein beschleunigtes oder verlangsamtes Ausfällen des hydrophoben, wasserunlöslichen Polymers erreicht. Dies wird als "zeitgesteuertes Ausfällen" des Polymers bezeichnet.

Im nächsten Schritt wird die Polymerlösung eingebracht. Die Zusammensetzung, die Konzentration und die Menge an Polymerlösung wurden bereits zuvor beschrieben. Ganz allgemein gesprochen handelt es sich bei der Polymerlösung um eine fluide, hydrophobe Substanz, die unter der Einwirkung des Haftwassers ausfällt. Die Polymerlösung verdrängt die Porenfüllung, hier das organische Verdrängungsmittel, und kleidet die Gesteinsoberfläche, wie Kies oder Fels, mit einem dünnen Film aus. Durch das Auskleiden des Porenraumes mit einem hydrophoben, wasserunlöslichen Polymer wird der Wasserzufluß verringert oder sogar vollständig eingestellt, ohne den Durchgang von Öl und/oder Kohlenwasserstoffgas zu der Bohrung zu verhindern.

Die überschüssige Polymerlösung wird durch Einbringen eines weiteren Verdrängungsmittels, wie Dieselöl oder Kohlenwasserstoffgas, aus dem Porenraum entfernt und gelangt durch diese Verdrängung an Stellen der Lagerstätte, wo noch keine Polymerlösung vorhanden ist und eine Umsetzung mit dem dort vorhandenen Haftwasser noch möglich ist. Auf diese Weise wird eine in die Lagerstätte eindringende Absperrung erreicht, die zwar von Vorteil aber nicht unbedingt erforderlich ist.

Die vorstehend genannten Maßnahmen werden bevorzugt so durchgeführt, daß die nächste Maßnahme erst beginnt, wenn die vorhergehende Maßnahme erfolgt ist. Es ist andererseits nicht auszuschließen, daß zwei oder gar mehrere Maßnahmen gleichzeitig durchgeführt werden, wenn dies gewünschte Auswirkung auf das zeitgesteuerte Ausfällen des Polymers besitzt.

Im Anschluß an die Injektion der Polymerlösung wird die Förderrohrtour eingebaut, Unterdruck in der Bohrung hergestellt und mit der Rückförderung begonnen. Dabei hat sich gezeigt, daß die in der Lagerstätte vorhandenen Fluide, bestehend aus Lagerstättenwasser, Verdrängungsmittel, nicht umgesetzter Polymerlösung, Öl und Kohlenwasserstoffgas mit dem das Polymer enthaltenden Teil der Lagerstätte in Kontakt kommen, wobei das Öl und das Kohlenwasserstoffgas diesen Teil der Lagerstätte selektiv durchströmen.

Die Polymerlösungen werden bevorzugt zur Verringerung oder vollständigen Einstellung des Wasserzuflusses bei Bohrungen in Sandstein, Carbonatgestein oder Silikatgestein eingesetzt.

Die nachfolgende Untersuchung belegt die Wirksamkeit der hydrophoben, wasserunlöslichen Polymeren auf den Fließwiderstand von Salzwasser und Gas in einem porösen Medium.

1. Verwendete Materialien

| | |
|---|---|
| A: Polymerlösung: | Polystyrol in Aceton |
| | Konzentration: 200 mg/l |
| B: Modellwasser: | Salinität: 100 g/l pH = 6,5 |
| | Zusammensetzung: (Gew.-%) |
| | $NaCl$ 62,0 $MgCl_2$ 5,4 |
| | $NaHCO_3$ 17,5 $CaCl_2$ 5,2 |
| | $Na_2SO_4$ 9,9 |
| C: Vogesen Sandstein: | d = 30 mm, l = 200 mm |
| | Permeabilität: 0,04 - 0,06 $\mu m^2$ |
| | Porosität: 19 - 20% |

2. Versuchsdurchführung

2.1 Einbau des Sandsteinkerns in eine Hasslerzelle

2.2 Bestimmung von $\Delta P_{1(Gas)}$ über den Kern bei einer Gasinjektionsrate von 100 $cm^3$/min ($\Delta P_{1(Gas)}$: Druckdifferenz zwischen Kerneingang und Kernausgang vor Zugabe der Polymerlösung)

3. Ermittlung der Gaspermeabilität nach der Darcy-Methode (G. Pusch: Stationäre instationäre Gaspermeasbilitätsmessung an niedrig permeablen Gesteinen, Erdöl-Erdgas-Kohle, 102 (1986), 5, S. 235-239)

4. Evakuierung des Kerns bei einem Druck von 1 mbar und anschließende Sättigung mit Modellwasser bei einer Fließrate von 10 $cm^3$/h

5. Bestimmung von $\Delta P_{1(Wasser)}$ über den Kern bei einer Modellwasserinjektionsrate von 10 $cm^3$/h

6. Bestimmung der Wasserpermeabilität nach der Darcy-Methode

7. Einstellung der Haftwassersättigung durch Verdrängung des Porenwassers mit Gas (Stickstoff) bei einer Fließrate von 100 $cm^3$/h in vertikaler Flutrichtung.

8. Injektion der Polymerlösung in einer Menge, die der Hälfte des Porenvolumens entspricht, Injektionsrate von 10 $cm^3$/h; anschließende Wartezeit: 2h.

9. Verdrängen der überschüssigen Polymerlösung mittels Gas und Durchströmen des polymerhaltigen Porenraumes mittels Gas, dabei Bestimmung von $\Delta P_{2(Gas)}$ bei einer Gasinjektionsrate von 100 $cm^3$/min über einen Zeitraum von 45 Tagen. ($\Delta p_2$: Druckdifferenz zwischen Kerneingang und Kernausgang nach Zugabe der Polymerlösung)

Ermittlung des residuellen Fließwiderstandes für Gas (RRF) nach folgender Gleichung

$$RRF_{Gas} = \Delta P_{2(Gas)}/\Delta P_{1(Gas)}$$

bei einer konstanten Fließrate von 100 $cm^3$/min.

10. Sättigung des Gesteinskerns mit Modellwasser bei einer Fließrate von 10 $cm^3$/h

11. Bestimmung von $\Delta P_{2(Wasser)}$ bei einer Modellwasserinjektionsrate von 10 ml/h über einen Zeitraum von 45 Tagen.

Ermittlung des residuellen Fließwiderstandes für Wasser:

$$RRF_{Wasser} = \Delta P_{2(Wasser)}/\Delta P_{1(Wasser)}$$

bei einer Injektionsrate von 10 $cm^3$/h

Die Ergebnisse dieses typischen Versuches sind in Fig. 2 dargestellt. Der Fließwiderstand für Gas ($RRF_{Gas}$) ist nur wenig erhöht über den Wert 1 und bleibt über einen langen Zeitraum annährend unverändert, während der residuelle Fließwiderstand für Salzwasser ($RRF_{Wasser}$) auf den 40-fachen Wert ansteigt.

**Patentansprüche**

1. Verfahren zur Verringerung oder vollständigen Einstellung der Wasserzuflüsse einer Lagerstätte in mindestens einem Teil einer Bohrung zur Gewinnung von Öl und/oder Kohlenwasserstoffgas, die eine Lagerstätte durchquert, wobei man ausgehend von der Bohrung in den Teil der Lagerstätte, in dem man die Wasserzuflüsse reduzieren oder einstellen will, eine Lösung eines Polymers einbringt und anschließend die Bohrung zur Gewinnung von Öl oder Kohlenwasserstoffgas in Betrieb nimmt, wobei

die Fluide, die in der Lagerstätte vorhanden sind, mit dem genannten das Polymer enthaltenden Teil der Lagerstätte in Kontakt kommen und das Öl und/oder Kohlenwasserstoffgas diesen Teil der Lagerstätte durchströmt und in die Bohrung gelangt, dadurch gekennzeichnet, daß die nicht-wäßrige Lösung eines hydrophoben, wasserunlöslichen Polymers in die Lagerstätte eingebracht wird, und das Polymer in Gegenwart des Haftwassers der Lagerstätte ausfällt.

**2.** Verfahren gemäß Anspruch 1, dadurch gekennzeichnet, daß zunächst salzhaltiges Wasser, anschließend ein Verdrängungsmittel, danach die Lösung des Polymers und nachfolgend ein Verdrängungsmittel in die Lagerstätte eingebracht werden.

**3.** Verfahren gemäß Anspruch 1 oder 2, dadurch gekennzeichnet, daß die Lösung des Polymers in ein Kiesbett eingebracht wird.

**4.** Verfahren gemäß einem der Ansprüche 1 bis 3, dadurch gekennzeichnet, daß als hydrophobe, wasserunlösliche Polymere Polystyrol, Poly(meth)acrylsäureester, sowie deren Copolymere und Ethylen-Vinylacetat-Copolymere oder Mischungen aus diesen Verbindungen eingesetzt werden.

**5.** Verfahren nach einem der Ansprüche 1 bis 4, dadurch gekennzeichnet, daß die Lösung des Polymers eine Konzentration von 0,01 bis 20 Gew.-% besitzt.

**6.** Verfahren nach einem der Ansprüche 1 bis 5, dadurch gekennzeichnet, daß als Lösungsmittel Ketone, bevorzugt Aceton oder Diacetonalkohol und/oder ein- oder mehrkernige, aromatische Kohlenwasserstoffe, bevorzugt Toluol oder Xylol, sowie deren Gemisch eingesetzt werden.

**7.** Verwendung von hydrophoben, wasserunlöslichen Polymeren zur Verringerung oder vollständigen Einstellung der Wasserzuflüsse einer Lagerstätte in mindestens einem Teil einer Bohrung zur Gewinnung von Öl und/oder Kohlenwasserstoffgas, die eine Lagerstätte durchquert.

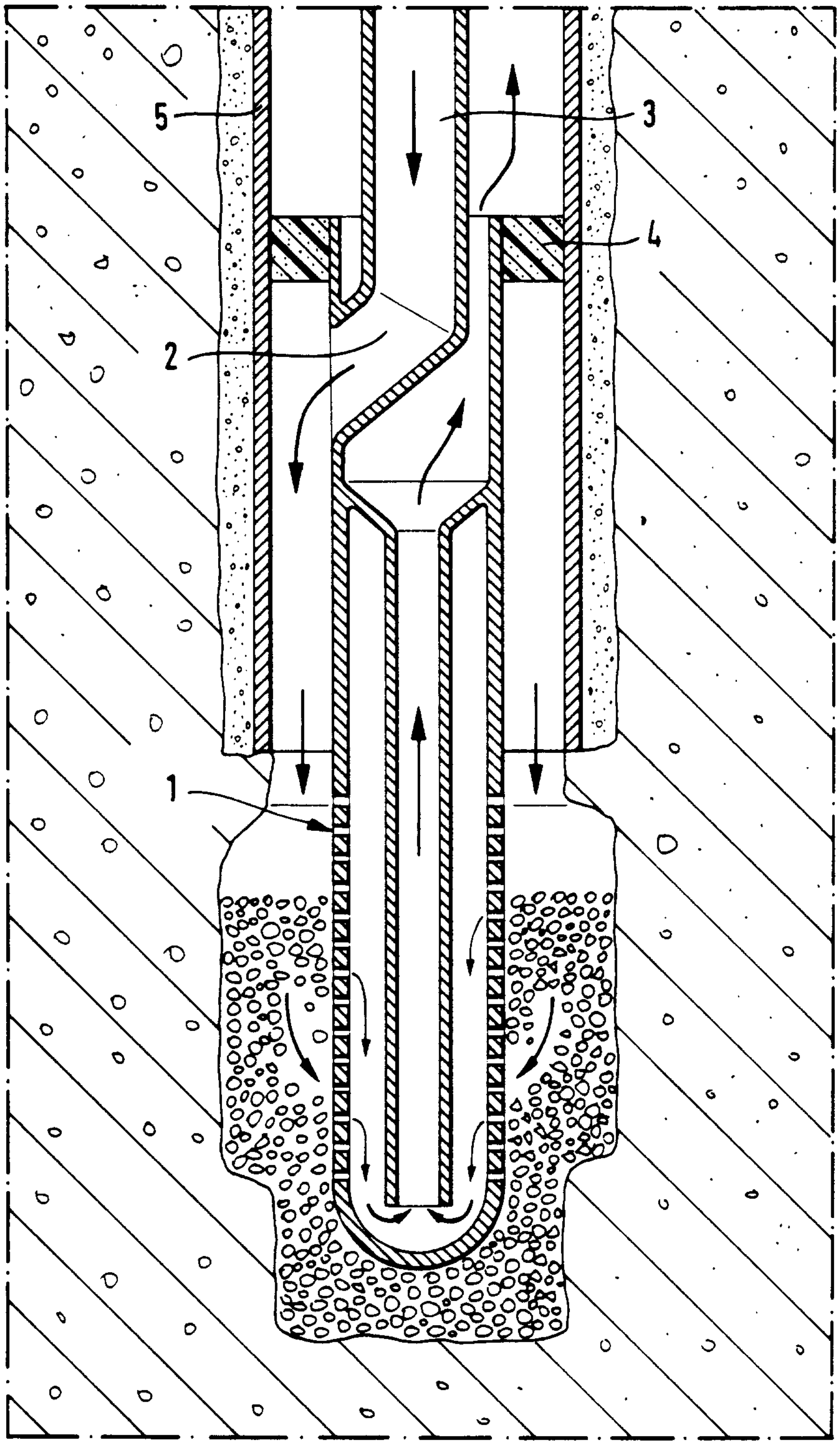


Fig. 1

Fig. 2

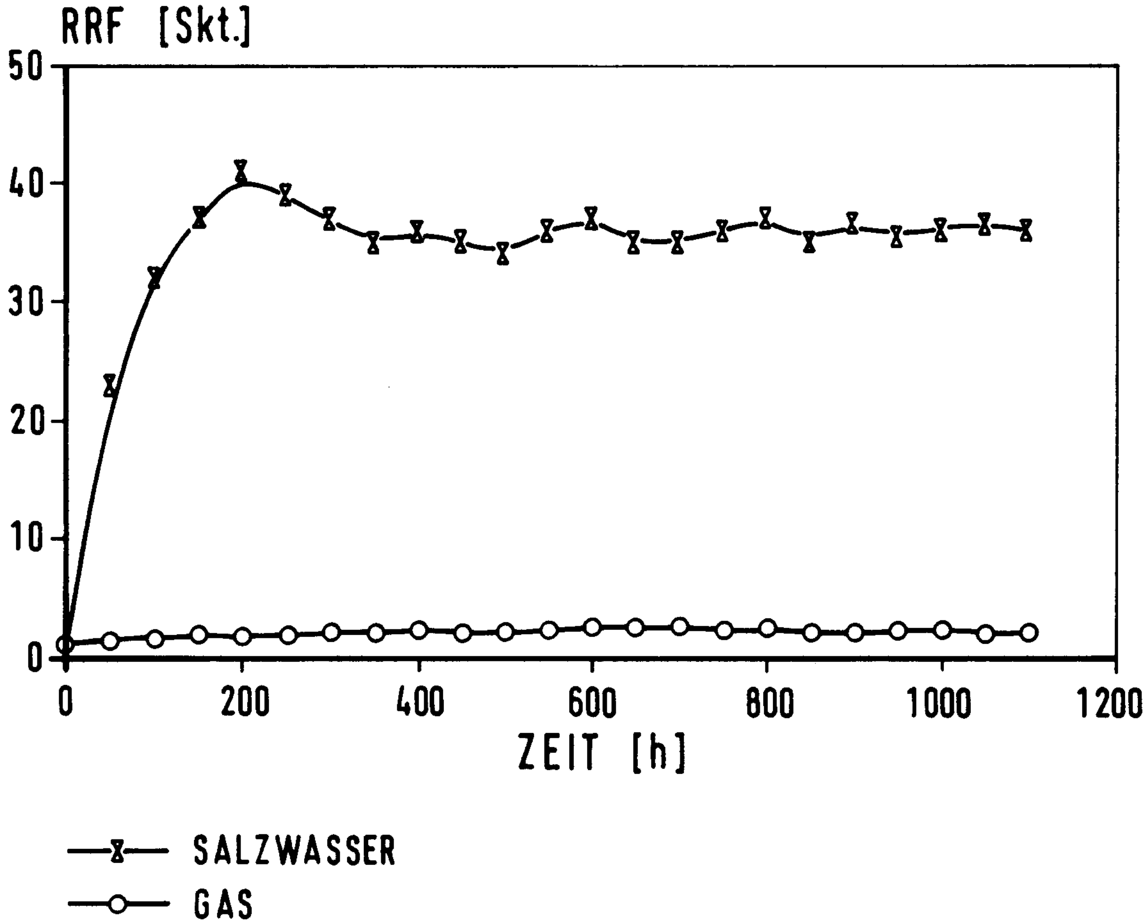
RRF [Skt.]
50
40
30
20
10
0
0
200
400
600
800
1000
1200
ZEIT [h]
SALZWASSER
GAS